Europäisches Patentamt

European Patent Office

Office européen des brevets

(11) Veröffentlichungsnummer: **0 315 770**
**A2**

(12) **EUROPÄISCHE PATENTANMELDUNG**

(21) Anmeldenummer: 88116276.2

(51) Int. Cl.⁴: **B29C 43/32**

(22) Anmeldetag: 01.10.88

(30) Priorität: 07.10.87 DE 3733873

(43) Veröffentlichungstag der Anmeldung:
17.05.89 Patentblatt 89/20

(84) Benannte Vertragsstaaten:
AT BE CH DE ES FR GB IT LI NL SE

(71) Anmelder: BASF Aktiengesellschaft
Carl-Bosch-Strasse 38
D-6700 Ludwigshafen(DE)

(72) Erfinder: Minor, Roman
Scheffelstrasse 4
D-6711 Laumersheim(DE)

(54) Preßwerkzeug für Kunststofformteile.

(57) Preßwerkzeuge werden zur Verarbeitung von Kunststoffen, insbesondere von faserverstärkten Kunststoffen zu Formteilen in Pressen eingesetzt. Sie bestehen im wesentlichen aus einem mit dem Gestell der Presse fest verbindbaren Unterteil (2) und einem diesem gegenüber beweglich geführten und mit einem Antrieb des Gestells verbindbaren Oberteil (1). Ober- und Unterteil des Werkzeugs bilden zusammen mit Antriebsorganen (20) für das Zufahren von das Formnest (3) begrenzenden Teilen (14, 15, 16) eine Stammeinheit. Die Teile sind in der Stammeinheit austauschbar gehalten und geführt.

FIG.1

## Preßwerkzeug für Kunststofformteile

Die Erfindung betrifft ein Preßwerkzeug zur Herstellung von Formteilen aus Kunststoffen, insbesondere aus faserverstärkten Kunststoffen, bestehend aus einem mit dem Gestell der Presse fest verbindbaren Unterteil und einem diesem gegenüber beweglich geführten und mit einem Antrieb des Gestells verbindbaren Oberteil.

Formteile, beispielsweise aus faserverstärkten Kunststoffen, wie Blattfedern, werden üblicherweise in Pressen mittels auswechselbarer Preßwerkzeuge hergestellt. Dabei ist bei Formteilen unterschiedlicher Form oder Abmessungen jeweils ein entsprechend gestaltetes, komplettes Werkzeug bereitzustellen.

Vielfach werden aus spannungstechnischen Gründen die Formteile an den Flanken mit Radien versehen sein. Mit sogenannten Tauchkantenwerkzeugen kann einseitig ein Radius durch die Kavität der Matrize direkt beim Preßvorgang erzeugt werden. Dies geschieht meist an der Formteilunterseite, der Zugseite. Wollte man auch die oberen Radien an der Druckseite mit dem Werkzeug anformen, so würden sich an der Patrize zwei scharfe Schneiden ergeben. Diese sind bei den geforderten Abmessungen nur mit größtem Aufwand herstellbar und würden die Standzeit des Werkzeugs auf ein Minimum begrenzen. Die notwendigen Radien werden deshalb in einem nachfolgenden Bearbeitungsschritt angefräst. Nachteilig dabei sind die Störung des Formteilgefüges durch das Durchtrennen der Faserstränge beim Fräsen und der zusätzliche Fertigungsaufwand.

Außerdem erschwert der geschlossene und starre Aufbau eines solchen Werkzeugs die Handhabung in Bezug auf die Beschickung mit Rohmaterial und die Entnahme der Formteile. So muß zum Beispiel das Vorwärmen des Preßgutes außerhalb der Form erfolgen.

Dementsprechend ist die bisher übliche Herstellungsweise von Formteilen durch Pressen sowohl gerätetechnisch als auch verfahrenstechnisch aufwendig.

Vorliegender Erfindung liegt daher die Aufgabe zugrunde, ein Preßwerkzeug zu entwickeln, durch das bei der Herstellung von Kunststofformteilen sowohl der werkzeugtechnische als auch der verfahrenstechnische Aufwand gegenüber der herkömmlichen Herstelltechnik verringert ist.

Die Lösung der Aufgabe besteht in einem Preßwerkzeug der eingangs geschilderten Art, bei dem nach der vorliegenden Erfindung das Ober- und Unterteil des Werkzeugs zusammen mit Antriebsorganen für das Zufahren von das Formnest begrenzenden Teilen eine Stammeinheit bilden und die vorgebenden Teile in der Stammeinheit austauschbar gehalten und davon die verfahrbaren Teile mit den Antriebsorganen lösbar verbindbar sind.

Einzelheiten sowie verschiedene Ausführungsformen und Vorteile des Preßwerkzeugs sind anhand der Zeichnung nachfolgend beschrieben.

Es zeigen

Figur 1 das Preßwerkzeug im Querschnitt, in geöffnetem Zustand

Figur 2 das Preßwerkzeug im Querschnitt, in geschlossenem Zustand

Figur 3 das Preßwerkzeug im Querschnitt, mit eigenem Antrieb zum Öffnen und Schließen

Figur 4 das Preßwerkzeug ausschnittssweise im Längsschnitt, mit einem Formkern

Figur 5 das Preßwerkzeug im Querschnitt, mit einer achsparallel geführten Verriegelung von Ober- und Unterteil, in geöffnetem Zustand

Figur 6 das Preßwerkzeug nach Figur 5, in geschlossenem Zustand

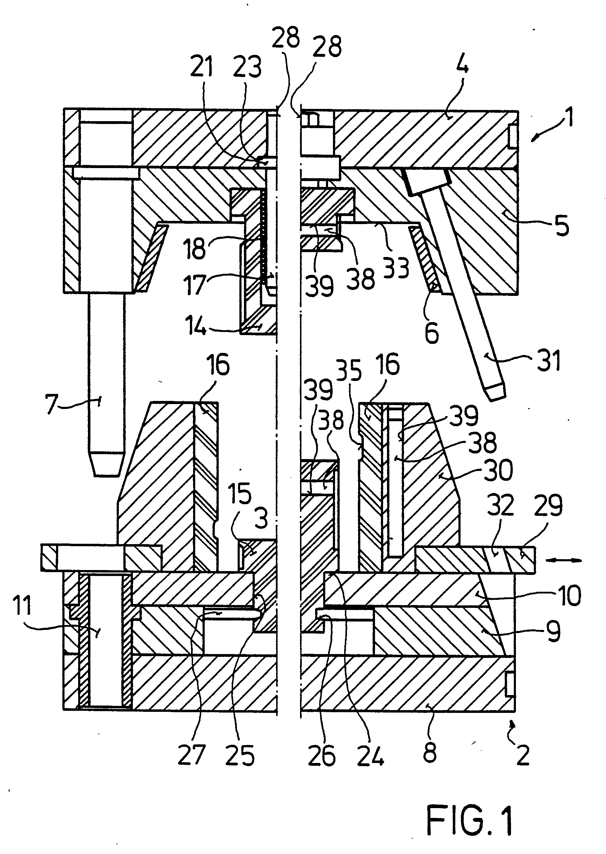

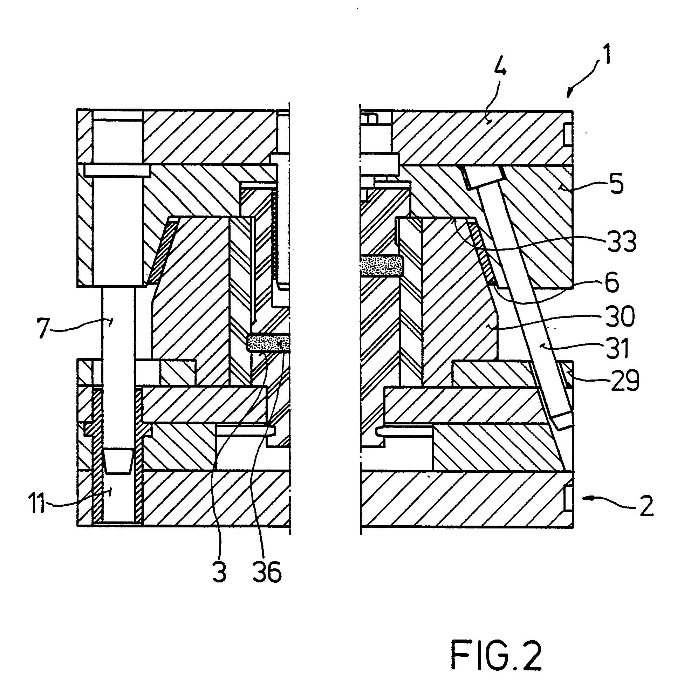

Das Preßwerkzeug besteht im wesentlichen aus einer Stammeinheit mit dem Oberteil 1 und dem Unterteil 2 und aus den das Formnest 3 bildenden Teilen, die austauschbar sind (Figur 1 und 2).

Das Oberteil 1 besteht aus einer oberen Aufspannplatte 4 mit einer Zuhaltekonusplatte 5, die im konischen Teil mit Druckleisten 6 versehen ist. Im Randbereich des Oberteils sind Führungssäulen 7 vorgesehen.

Das Unterteil 2 des Werkzeugs weist eine untere Aufspannplatte 8 auf, die mittels Distanzleisten 9 eine Zwischenplatte 10 aufnimmt. Im Randbereich des Unterteils sind mit den Führungssäulen 7 korrespondierende Führungshülsen 11 vorgesehen, so daß Ober- und Unterteil zentriert und parallel zueinander bewegt werden können. Der Antrieb des Oberteils erfolgt im Pressengestell (in der Zeichnung nicht dagestellt), in das die beiden Werkzeugteile 1 und 2 eingesetzt werden, in bekannter Weise mechanisch, beispielsweise mittels eines Exzenters, oder hydraulisch durch einen Arbeitszylinder.

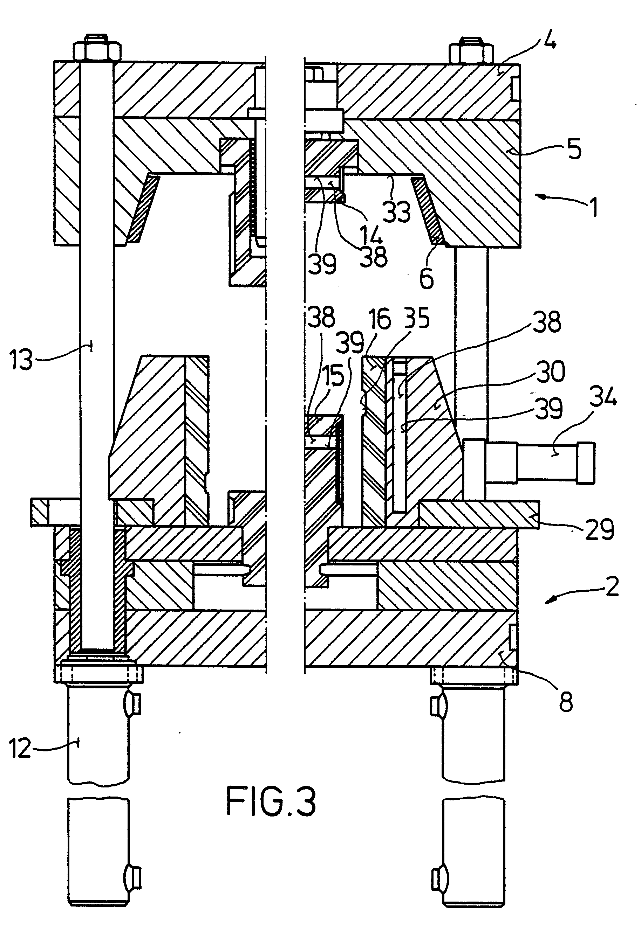

Wird das Preßwerkzeug mit einem eigenen Antrieb versehen, so kann es ohne Presse betrieben werden. Hierzu sind, wie in Figur 3 zu sehen, beispielsweise am Unterteil 2 an der unteren Aufspannplatte 8 Arbeitszylinder 12 befestigt, deren Kolbenstangen 13 an ihrem freien Ende das Oberteil 1 zur Führung und zum Antrieb desselben aufnehmen. Damit kann das Werkzeug geöffnet bzw. geschlossen sowie die Zuhaltekraft aufgebracht werden.

Die formgebenden Teile sind ein im Oberteil 1 gehaltener, oberer Formstempel 14, ein im Unterteil 2 gehaltener, unterer Formstempel 15 sowie zwei Seitenwangen 16. Alle Teile sind zur Bildung des Formnestes 3 innerhalb des Werkzeuges aufeinander zufahrbar und an ihren Oberflächen mit dem formgebenden Profil versehen.

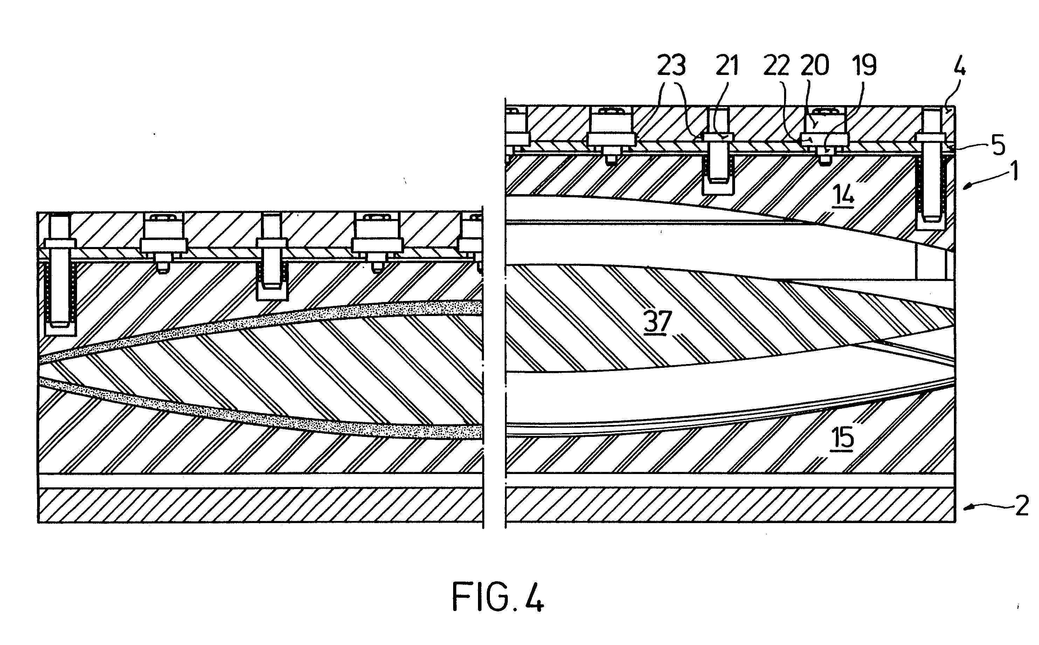

Der die Preßkraft ausübende, obere Formstempel 14 ist an Führungsbolzen 17 mittels Kugellagerung 18 axial verschiebbar geführt und an Kolbenstangen 19 (Fig. 4) von Arbeitszylindern 20 durch eine Verschraubung lösbar gehalten. Führungsbolzen und Arbeitszylinder sind mit kragenartigen Erweiterungen 21, 22 in Bohrungen 23 zwischen der oberen Aufspannplatte 4 und der Zuhaltekonusplatte 5 eingespannt.

Der untere Formstempel 15 ist an einer Abstufung 24 in einer langgestreckten Öffnung 25 der Zwischenplatte 10 in der Längsausdehnung des Werkzeuges verschiebbar gehalten und mittels in den Distanzleisten 9 geführter, in seitliche Bohrungen 26 des Formstempels eingreifender Stifte 27 befestigt. Diese Ausführungsform erlaubt ein schnelles und einfaches Austauschen des Formstempels durch seitliches Ausfahren aus dem Unterteil.

Selbstverständlich kann die Anordnung der Formstempel bezüglich der axialen Verschieblichkeit und der stationären Halterung auch umgekehrt werden, so daß sinngemäß vorstehender Erläuterung der untere Formstempel axial verschieblich ist sowie das Unterteil 2 mit den entsprechenden Führungen und Arbeitszylindern ausgestattet ist und der obere Formstempel seitlich verschiebbar und feststellbar ist.

Die beiden Seitenwangen 16 sind symmetrisch zur Werkzeugachse 28 angeordnet und auf der Zwischenplatte 10 in Führungsleisten 29 mittels Schiebeelemente 30 zur Achse verfahrbar. Unter der Bewegung des Oberteils 1 gelangen darin befestigte Führungselemente 31 in Bohrungen 32 der Führungsleisten und nehmen dabei die Schiebeelemente mit den Seitenwangen in die Schließstellung der Form mit, in der sie, wie in Figur 2 zu sehen, durch die Innenfläche 33 der Zuhaltekonusplatte 5 und die Druckleisten 6 genau positioniert sind. Beim Zurückfahren des Oberteils nach dem Preßvorgang werden die Schiebeelemente mit den Seitenwangen wieder in die Offenstellung zurückgezogen.

Anstelle der Zwangsführung durch das Oberteil können die Schiebeelemente 30 zusammen mit den Seitenwangen 16 gemäß der Ausführungsform in Figur 3 auch durch Arbeitszylinder 34 verfahren werden.

Formseitig ist in die Seitenwangen 16 eine der vorgesehenen Formteilkontur entsprechende Nut 35 eingearbeitet, durch die beim Preßvorgang am Formteil 36 abgerundete Kanten angeformt werden.

Bei einer vorteilhaften Ausgestaltung des Preßwerkzeugs (Figur 4) ist zwischen dem oberen Formstempel 14 und dem unteren Formstempel 15 ein Formkern 37 angeordnet, so daß ein Doppelformnest entsteht. Es versteht sich, daß in diesem Fall oberer und unterer Formstempel das gleiche Oberflächenprofil haben.

Desweiteren ist es vorteilhaft, die formgebenden Teile 14, 15, 16 beheizbar zu gestalten, um das zu formende Material zu erwärmen. Hierfür können beispielsweise elektrische Heizelemente 38 in Bohrungen 39 der Teile eingesetzt werden. Es ist dabei zweckmäßig, die Seitenwangen 16 indirekt über die Schiebeelemente 30 zu temperieren. Bei keramischen Werkstoffen der Teile kann die Erwärmung auch dielektrisch mittels hochfrequenter elektromagnetischer Energieübertragung erfolgen.

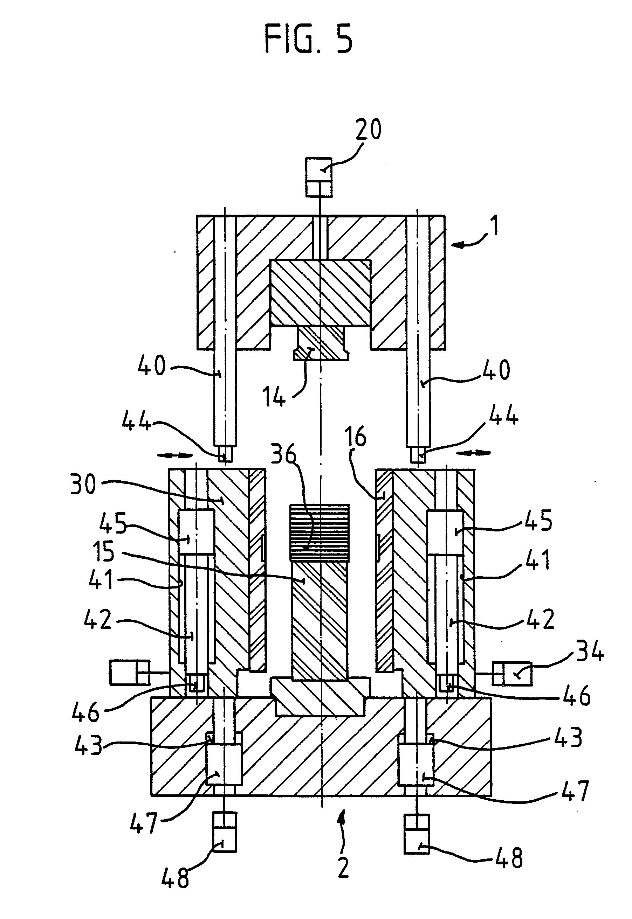

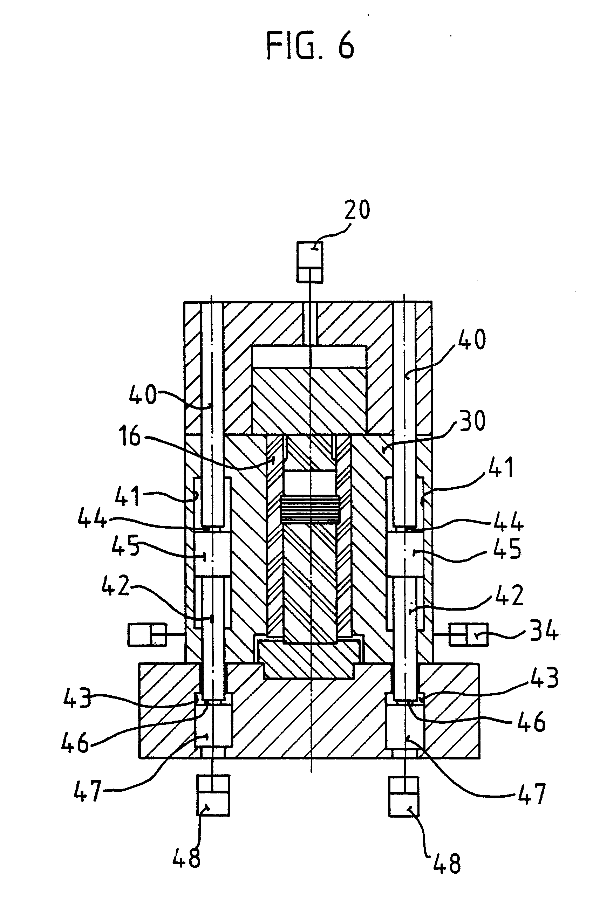

In Figur 5 und 6 ist eine Ausführungsform des Preßwerkzeugs gezeigt, bei der die Verriegelung des mittels eines Arbeitszylinders in die Schließstellung gebrachten Oberteils 1 und der Seitenwangen 16 durch ein achsparallel geführtes, dreiteiliges Verriegelungssystem erfolgt. Der erste Teil besteht aus Stäben 40, die im Oberteil symmetrisch zur Werkzeugachse 28 befestigt sind. Im zweiten Teil weisen die Schiebeelemente 30 Bohrungen 41 auf, die in der Schließstellung der Schiebeelemente koaxial zu den Stäben angeordnet sind. In diesen Bohrungen sind weitere Stäbe 42 verschiebbar geführt, denen wiederum Bohrungen 43 im dritten Teil, dem Unterteil 2, zugeordnet sind. Die kraftschlüssige Verbindung des dreiteiligen Systems zur Verriegelung der Werkzeugteile in der Schließstellung ist dadurch herstellbar, daß einerseits das freie Ende der Stäbe 40, 42 und andererseits die Stäbe 42 und die Bohrungen 43 mit unter axialer Bewegung der Stäbe in Eingriff bringbaren Verriegelungselementen 44, 45 und 46, 47 versehen sind. Solche Elemente stehen im Fachhandel zur Verfügung und können beispielsweise durch eine Ringnut am Stabende und ein in der zugehörigen Bohrung befindliches, federbelastetes Kugellager gebildet sein. Dabei sind die den Stäben 40 zugeordneten Verriegelungsteile 45 mit den Stäben 42 festverbunden, während die den Stäben 42 zugeordneten Teile 47 in den Bohrungen 43 mit axialem Spiel gehalten sind. Zum Spannen der im Verriegelungseingriff befindlichen Teile sind die im Unterteil 2 gehaltenen Verriegelungsteile 47 mit pneumatischen oder hydraulischen Arbeitszylindern 48 verbunden.

Die Verriegelung der vorstehend beschriebenen Werkzeugteile beginnt damit, daß unter dem Zufahren des Oberteils 1 die Stäbe 40 in die Bohrungen 41 der zuvor in die Schließstellung gebrachten Schiebeelemente 30 und dabei in Eingriff mit den Verriegelungsteilen 45 gelangen, so daß im weiteren Bewegungsablauf die Stäbe 42 in die Bohrungen 43 geschoben und weiter in die Verriegelungsteile 47 gedrückt werden. Durch anschließendes Betätigen der Arbeitszylinder 48 wird die Verriegelung gespannt und ist damit spielfrei. Das Preßwerkzeug ist für den Preßvorgang durch den Formstempel 14 vorbereitet. Das Lösen der Verriegelung nach dem Preßvorgang erfolgt durch das Auffahren des Oberteils sinngemäß in umgekehrter Weise.

Für die Montage- und Befestigung der vorstehend beschriebenen Teile des Preßwerkzeugs werden dem Fachmann geläufige Mittel verwendet, die in der Zeichnung der besseren Übersichtlichkeit wegen nicht dargestellt sind. Die Einzelteile des Ober- und Unterteils sowie die Seitenwangen und Schiebeelemente werden beispielsweise durch Verschraubungen zusammengehalten.

Wie die vorstehenden Erläuterungen erkennen lassen, ist das Werkzeug nach allen Seiten öffenbar, so daß das Einbringen des zu formenden Materials und die Entnahme des Formteils sehr erleichtert sind. Ferner wird dadurch der Einsatz von Handhabungsmechaniken begünstigt.

Für die Herstellung von Formteilen aus Kunststoffen, insbesondere aus Faserverbundwerkstoffen hat das Preßwerkzeug nach der Erfindung entscheidende Vorteile für den Fertigungsablauf. Im Gegensatz zu der bisher üblichen, starren sowie formteilspezifischen Monoform mit kosten- und zeitintensivem Beschaffungsaufwand beinhaltet das neue Werkzeug eine Vielzahl von Möglichkeiten, den Fertigungsablauf kostengünstig, flexibel und rationell zu gestalten und den werkzeugtechnischen Aufwand auf ein Minimum zu reduzieren. Weitere Vorteile der erfindungsgemäßen Werkzeugkonstruktion sind nachfolgend aufgezeigt:

- Für die Herstellung von Formteilen, beispielsweise aus Reaktionsharzprepregs oder Thermoplastprepregs, unterschiedlicher Form und Größe ist die Beschaffung von nur einer Stammeinheit notwendig. Die Ausführung und die Abmessungen der Stammeinheit werden entsprechend dem größten herzustellenden Formteil gewählt. Im Rahmen dieses Grundaufbaues ist dann durch die Gestaltungsfreiheit der formgebenden Austauschteile jede Formgeometrie möglich.
- Sämtliche Führungselemente und Antriebsorgane sind Bestandteil der Stammeinheit.
- Die Formkosten werden durch die geometrisch einfachen, formgebenden Austauschteile, nämlich oberer und unterer Formstempel sowie zwei Seitenwangen, wesentlich reduziert.
- Die Austauschteile werden durch die sie umgebende Stammeinheit geschützt und gestützt und müssen deshalb nicht in vollem Umfang die auftretenden Kräfte aufnehmen. Aus diesem Umstand ergibt sich die Auswahlmöglichkeit für verschiedene Materialien, wie Stahl, Aluminium, Messing, Epoxidharz, Keramik, Glas und Kunststoffe.
- Radien sowohl an der Formteilober- als auch -unterseite werden durch eine der Formteilkontur entsprechende Nut in den Seitenwangen bei der Herstellung im Werkzeug angeformt. Dadurch wird das Durchtrennen von Fasern vermieden, das beim bisher notwendigen, nachträglichen Anfräsen auftrat. Dieser Bearbeitungsschnitt ist nicht mehr erforderlich.
- Einer der beiden Formstempel ist innerhalb der Stammeinheit durch einen Arbeitszylinder in Richtung der Werkzeugachse verfahrbar. Damit kann der Preßzyklus unabhängig von der Pressensteuerung ablaufen. Die Verdichtungsarbeit und der Preßdruck können unabhängig von äußeren Einrichtungen aufgebracht werden. Somit besteht die Möglichkeit, auf den Einsatz von aufwendigen Pressen zu verzichten und stattdessen auf kostengünstigere Werkzeugträger zurückzugreifen.
- Der untere Formstempel kann seitlich aus der Stammeinheit geschoben werden. Dadurch besteht die Möglichkeit, den Formstempel zwischen den Preßtakten in einem mechanisierten Arbeitsschritt auszutauschen, beispielsweise gegen einen außerhalb der Stammeinheit mit neuem Formmaterial vorbereiteten Formstempel.

## Ansprüche

1. Preßwerkzeug zur Herstellung von Formteilen aus Kunststoffen, insbesondere aus faserverstärkten Kunststoffen, bestehend aus einem mit dem Gestell der Presse fest verbindbaren Unterteil (2) und einem diesem gegenüber beweglich geführten und mit einem Antrieb des Gestells verbindbaren Oberteil (1), dadurch gekennzeichnet, daß das Ober- und Unterteil (1, 2) des Werkzeuges zusammen mit Antriebsorganen (20) für das Zufahren von das Formnest (3) begrenzenden Teilen (14, 15, 16) eine Stammeinheit bilden und die formgebenden Teile (14, 15, 16) in der Stammeinheit austauschbar gehalten und davon die verfahrbaren Teile (14, 16) mit den Antriebsorganen (20, 34) lösbar verbindbar sind.

2. Preßwerkzeug nach Anspruch 1, dadurch gekennzeichnet, daß die formgebenden Teile ein im Oberteil (1) des Werkzeugs axial verschieblich gehaltener und mit Arbeitszylindern (20) verbundener, die Preßkraft ausübender Formstempel (14), ein im Unterteil (2) lösbar befestigter Formstempel (15) und zwei symmetrisch zur Werkzeugachse (28) auf dem Unterteil (2) verschieblich angeordnete und mit einem Antrieb in Verbindung stehende Seitenwangen (16) sind.

3. Preßwerkzeug nach Anspruch 2, dadurch gekennzeichnet, daß auf dem Unterteil (2) des Werkzeugs an den Seitenwangen (16) angreifende Schiebeelemente (30) zur Werkzeugachse (28) bewegbar angeordnet sind, die über im Oberteil (1) verankerte Führungselemente (31) durch dessen Bewegung antreibbar sind.

4. Preßwerkzeug nach Anspruch 2, dadurch gekennzeichnet, daß auf dem Unterteil (2) des Werkzeugs an den Seitenwangen (16) angreifende Schiebeelemente (30) zur Werkzeugachse (28) bewegbar angeordnet und jeweils mit einem Arbeitszylinder (34) verbunden sind.

5. Preßwerkzeug nach Anspruch 1 bis 4, dadurch gekennzeichnet, daß zur Verriegelung der in die Schließstellung gebrachten Teile des Werkzeugs das Oberteil (1) und die Schiebeelemente (30) mit Stäben (40, 42) und die Schiebeelemente und das Unterteil (2) mit in dieser Stellung zu den Stäben koaxialen Bohrungen (41, 43) versehen sind, wobei einerseits das freie Ende der Stäbe und andererseits die Bohrungen miteinander in Eingriff bringbare Verriegelungselemente (44-47) aufweisen, die unterteilseitig mit Arbeitszylindern (48) verbunden sind.

6. Preßwerkzeug nach Anspruch 1 bis 5, dadurch gekennzeichnet, daß die Seitenwangen (16) formgebende Ausnehmungen (35) aufweisen.

7. Preßwerkzeug nach Anspruch 1 bis 6, dadurch gekennzeichnet, daß der stationäre Formstempel (15) in Führungen (25) des Unterteils (2) verschieblich gehalten und seitlich aus diesem fahrbar ist.

8. Preßwerkzeug nach Anspruch 1 bis 7, dadurch gekennzeichnet, daß zur Bildung eines Doppelformnestes zwischen den beiden Formstempeln (14, 15) ein Formkern (37) angeordnet ist.

9. Preßwerkzeug nach Anspruch 1 bis 8, dadurch gekennzeichnet, daß die formgebenden Teile (14, 15, 16) beheizbar sind.

10. Preßwerkzeug nach Anspruch 1 bis 9, dadurch gekennzeichnet, daß das Unterteil (2) des Werkzeugs mit Arbeitszylindern (12) versehen ist, dessen Kolbenstangen (13) am freien Ende das Oberteil (1) zur Führung und zum Antrieb desselben aufnehmen.

FIG.1

357/87

FIG.2

FIG.3

357/87

**FIG.4**

EP 0 315 770 A2

357/87

# FIG. 5

357/87

# FIG. 6